# EUROPEAN PATENT APPLICATION

(11) **EP 4 659 637 A1**
(43) Date of publication of application: **10.12.2025**
(21) Application number: 25180026.4
(22) Date of filing: 30.05.2025
(51) Int. Cl.: A47L 5/36, A47L 7/00, A47L 9/00

(54) **VACUUM CLEANING DEVICE**

(30) Priority: 06.06.2024 GB 202408040
(71) Applicant: Black & Decker, Inc., New Britain, CT 06053 (US)
(72) Inventor: DUENSER, Clemens, 55252 Mainz-Kastel (DE); TURISIN, Marek, 65527 Niedernhausen (DE); KERSTEN, Peter, 65934 Frankfurt (DE); BINSFELD, Marcel, 65510 Idstein (DE); DIEHL, Lukas, 65527 Niedernhausen (DE)
(74) Representative: SBD IPAdmin

(57) **Abstract**

A vacuum cleaning device comprises a housing having a dirty air inlet and a clean air outlet, a motor fan assembly mounted in the housing and configured to generate negative pressure airflow along an airflow path between the dirty air inlet and the clean air outlet, and a flexible air conduit in fluid communication between a motor fan outlet of the motor fan assembly and the clean air outlet. The flexible air conduit is configured to decouple vibrations generated from the motor fan assembly from the housing.

## Description

### Field

The technology relates to the field of vacuum cleaning devices, specifically focusing on the design and construction of workshop vacs.

### Background

Industrial vacuum cleaners are widely used in various settings, such as workshops, factories, and commercial spaces, for cleaning and maintaining a healthy and safe environment. These vacuum cleaners are designed to handle large volumes of dirt, dust, and debris. One issue associated with an industrial vacuum cleaner is the excessive noise generated during operation.

The noise produced by industrial vacuum cleaners can be disruptive and uncomfortable for users and those nearby, potentially affecting productivity and communication. Moreover, the vibration caused by the motor, fan, and other components can lead to wear and tear on the vacuum, reducing its lifespan and increasing maintenance costs. The primary sources of noise in an industrial vacuum cleaner are the motor and fan. Without proper insulation, the noise generated by these components can easily escape the vacuum and cause discomfort to users and those nearby.

Various attempts have been made in the prior art to address the noise issue in industrial vacuum cleaners. For example, EP3184011A1 discloses an air duct that comprises folds in the airflow path to reduce the noise of the exhaust airflow. An acoustic foam can be positioned in the air evacuation duct to reduce the speed of the air flow and reduce the noise. Similarly, US 7,247,180 discloses a silencer for a dust collection system. The silencer is formed from acoustic foam and positioned into the inlet side of a filter cartridge.

However, a problem with the solutions disclosed in EP3184011A1 and US 7,247,180 is that they transmit excessive noise to the environment external to the housing.

### Summary

According to a first aspect of the disclosure, a vacuum cleaning device is provided that includes a housing with a dirty air inlet and a clean air outlet. A motor fan assembly is mounted in the housing and is configured to generate negative pressure airflow along an airflow path between the dirty air inlet and the clean air outlet. The device also includes a flexible air conduit in fluid communication between a motor fan outlet of the motor fan assembly and the clean air outlet. The flexible air conduit is configured to decouple vibrations generated from the motor fan assembly from the housing which provides a reduction in noise generated by the vacuum cleaning device in use, improving the overall user experience.

Optionally in some examples, the flexible air conduit is connected between a motor fan outlet of the motor fan assembly and the clean air outlet along the airflow path.

Optionally in some examples, the flexible air conduit is made of a flexible foam or rubber material. This means that the flexible air conduit can also dampen the noise caused by the high air speed exhaust from the vacuum cleaning device.

Optionally in some examples, the flexible foam or rubber material is one or more of neoprene foam, polyurethane foam, silicone foam, natural rubber, closed cell foam, EPDM foam, nitrile foam, butyl foam, EVA foam, acoustic foam, polyethylene foam, melamine foam, PVC foam, open cell foam, soundproof foam, polyester foam, foam rubber, insulation foam, anechoic foam, and high-density foam. The use of these materials provides a wide range of options for optimising the performance and durability of the flexible air conduit.

Optionally in some examples, the vacuum cleaning device further includes a housing mounting lip projecting from the housing and configured to receive the flexible air conduit. This design feature facilitates easy assembly and disassembly of the vacuum cleaner.

Optionally in some examples, the housing mounting lip inserts into the flexible air conduit or surrounds an outer surface of the flexible air conduit. This design ensures a secure connection between the housing and the flexible air conduit.

Optionally in some examples, the motor fan outlet projects out from the motor fan assembly and is configured to receive the flexible air conduit. This design ensures a secure connection between the motor fan assembly and the flexible air conduit.

Optionally in some examples, the motor fan outlet inserts into the flexible air conduit or surrounds an outer surface of the flexible air conduit.

Optionally in some examples, the flexible air conduit has a constant cross-section or is tapered with an opening angle smaller than 10°. This design feature allows for optimal airflow, enhancing the cleaning performance of the vacuum cleaner.

Optionally in some examples, the flexible air conduit has a length in the range of 5 cm to 15 cm. This length range ensures that the vacuum cleaner is compact and manoeuvrable, while still providing efficient airflow.

Optionally in some examples, the flexible air conduit has an inside diameter in the range of 1 cm to 10 cm. This diameter range allows for optimal airflow, enhancing the cleaning performance of the vacuum cleaner.

Optionally in some examples, the flexible air conduit has a first conduit end connected to the motor fan assembly and a second conduit end connected to the clean air outlet.

Optionally in some examples, the vacuum cleaning device further includes a dirt container disposed along the airflow path between the dirty air inlet and the clean air outlet.

Optionally in some examples, the vacuum cleaning device further includes a filter disposed along the airflow path between the dirt container and the clean air outlet.

Optionally in some examples, the housing is cylindrical, or box shaped. These shapes provide a compact and efficient design, making the vacuum cleaner easy to store and manoeuvre.

Optionally in some examples, the vacuum cleaning device further includes a conduit connection for connecting the flexible air conduit to the motor fan outlet and the housing mounting lip. The conduit connection can be one or more of a slip fit, press fit, snap-fit, locking mechanism, hose clamp, band clamp, adhesive, and bonding agent.

Optionally in some examples, the vacuum cleaning device is a workshop vac. This type of vacuum cleaner is designed for heavy-duty cleaning tasks, making it suitable for use in workshops and other similar environments.

In addition to the above, the vacuum cleaning device can also be an industrial vacuum cleaner, a portable vacuum cleaner, a cordless vacuum cleaner, a wet and dry vacuum cleaner, a backpack vacuum cleaner, a canister vacuum cleaner, or an upright vacuum cleaner.

### Brief Description of the Drawings

Examples are described in more detail below with reference to the appended drawings.
Figure 1 is a front view of a vacuum cleaning device according to some examples; and
Figure 2 is a cross-sectional view of a vacuum cleaning device according to an example.

### Detailed Description

The detailed description set forth below provides information and examples of the disclosed technology with sufficient detail to enable those skilled in the art to practise the disclosure.

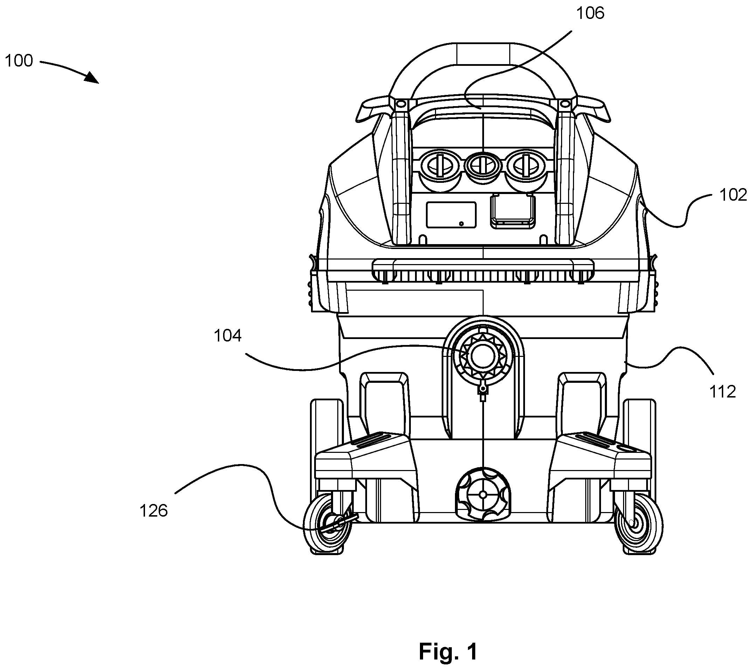

Figure 1 illustrates a front view of a vacuum cleaning device 100. In one example, and as shown in Figure 1, the vacuum cleaning device 100 can be a workshop vac. This type of vacuum cleaner is typically robust and powerful, designed to handle heavy-duty cleaning tasks in a workshop environment. Alternatively, the vacuum cleaning device 100 can be a wet and dry vacuum cleaner. In another example, the vacuum cleaning device 100 can be any other type of vacuum cleaner e.g. a portable vacuum cleaner, a cordless vacuum cleaner, a backpack vacuum cleaner, a canister vacuum cleaner or an upright vacuum cleaner. Indeed, any type of vacuum cleaner device 100 can be used.

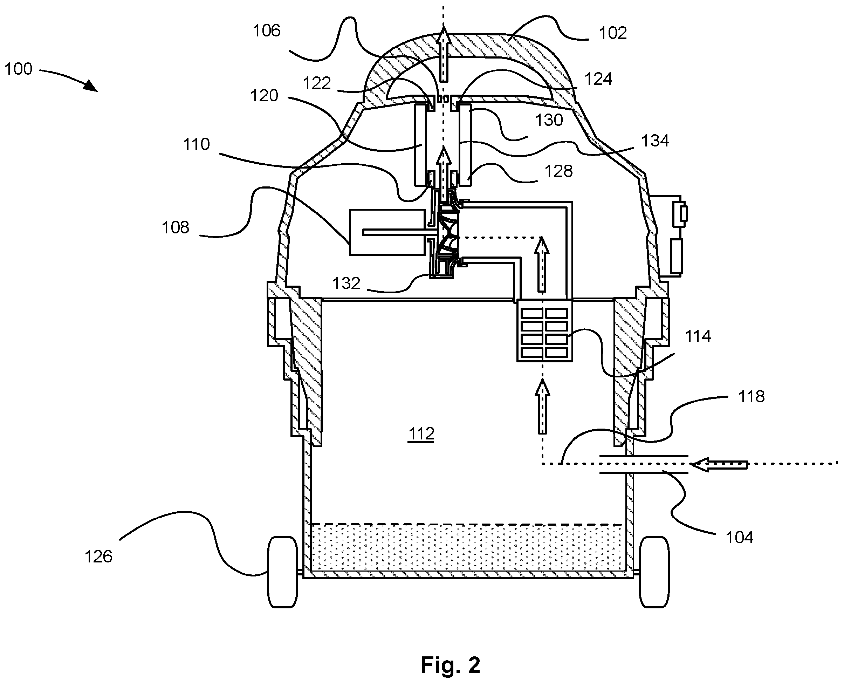

The vacuum cleaner device 100 includes a housing 102 that contains the motor fan assembly 108. The motor fan assembly 108 is mounted to the housing 102 and configured to generate a negative pressure airflow along an airflow pathway 118 (best shown in Figure 2) between a dirty air inlet 104 and a clean air outlet 106. The dirty air inlet 104 is designed to allow dirty air to enter the vacuum cleaning device 100, while the clean air outlet 106 is designed to allow clean air to exit the vacuum cleaning device 100.

In some configurations, the housing 102 of the vacuum cleaning device 100 can be cylindrical or box shaped. The housing 102 as shown in Figure 1 is generally cylindrical in shape.

In some implementations, the vacuum cleaning device 100 includes a dirt container 112. The dirt container 112 is disposed along the airflow path 118 between the dirty air inlet 104 and the clean air outlet 106. The dirt container 112 is designed to collect and store the dirt and debris that are sucked into the vacuum cleaning device 100 through the dirty air inlet 104. The dirt container 112 can be removable for easy emptying and cleaning.

In some configurations, the vacuum cleaning device 100 optionally includes wheels 126. The wheels 126 are mounted to the bottom of the housing 102 and are designed to enable the movement and manoeuvrability of the vacuum cleaning device 100. Optionally, vacuum cleaning device 100 does not comprise wheels 126.

Figure 2 shows a cross-sectional view of the vacuum cleaning device 100 according to an example. Examples of the vacuum cleaning device 100 will be discussed in more detail in reference to Figure 2.

In some examples, the clean air outlet 106 is mounted on the housing 102 of the vacuum cleaning device 100. The clean air outlet 106 serves as the exit point for the clean air that has passed through the vacuum cleaning device 100. The clean air outlet 106 can be designed in various ways, depending on the specific design, and intended use of the vacuum cleaning device 100. For instance, the clean air outlet 106 can include exhaust vents that allow the clean air to exit the vacuum cleaning device 100.

In some configurations, the housing 102 of the vacuum cleaning device 100 includes a housing mounting lip 122 adjacent to the clean air outlet 106. The housing mounting lip 122 projects from the clean air outlet 106 into the housing 102 and is configured to receive a flexible air conduit 120. The housing mounting lip 122 can be designed to insert into a flexible air conduit 120 or to surround the outer surface of the flexible air conduit 120. The flexible air conduit 120 will be discussed in more detail below. The housing mounting lip 122 provides a surface for securing the flexible air conduit 120 to the housing 102.

In some examples as shown in Figures 1 and 2, the dirty air inlet 104 is mounted on the collection tank 112 of the vacuum cleaning device 100. The dirty air inlet 104 serves as the entry point for the dirty air that is to be cleaned by the vacuum cleaning device 100. Various tools or accessories can be mounted to the dirty air inlet 104. For example, a vacuum hose (not shown) can be coupled to the dirty air inlet 104 so that the user can use a cleaning tool in fluid communication with the dirty air inlet 104. Alternatively, the dirty air inlet 104 can be mounted on the housing 102 (not shown) and then in fluid communication with the collection tank 112.

The dirty air inlet 104 can be designed in various ways, depending on the specific design, and intended use of the vacuum cleaning device 100. For instance, the dirty air inlet 104 can optionally include a dirty air inlet filter (not shown) that traps large particles and prevents them from entering the vacuum cleaning device 100.

As mentioned above, the motor fan assembly 108 is mounted in the housing 102 of the vacuum cleaning device 100. The motor fan assembly 108 is configured to generate negative pressure airflow along an airflow path 118 between the dirty air inlet 104 and the clean air outlet 106, which is for the operation of the vacuum cleaning device 100.

The motor fan assembly 108 comprises a motor operatively coupled to a fan. The motor fan assembly 108 is connected to a power source which is selectively controlled by a user interface. The power source can be a battery and / or a mains power supply. The use of a battery or main power supply with a motor fan assembly 108 is known. Similarly, control of such a motor fan assembly 108 with a user interface is also known and will not be discussed in further detail.

In some examples, the motor fan assembly 108 includes a motor fan housing 132. The motor fan housing 132 surrounds the fan assembly and guides the airflow along the airflow path 118. The motor fan assembly 108 comprises motor fan outlet 110 mounted on the motor fan housing 132. The motor fan outlet 110 projects out from the motor fan assembly 108 and is configured to receive the flexible air conduit 120. The motor fan outlet 110 can be designed to insert into the flexible air conduit 120 or to surround the outer surface of the flexible air conduit 120. The motor fan outlet 110 directs the airflow generated by the motor fan assembly 108 into the flexible air conduit 120.

The vacuum cleaning device 100 includes a flexible air conduit 120. The flexible air conduit 120 is in fluid communication between the motor fan outlet 110 of the motor fan assembly 108 and the clean air outlet 106.

By mounting the flexible air conduit 120 downstream of the motor fan assembly 108, the flexible air conduit 120 is not located in a low-pressure part of the vacuum cleaning device 100. Instead, the flexible air conduit 120 is located in a portion of the vacuum cleaning device 100 which has a pressure similar to the ambient pressure. This means that the high air speeds which lead to nuisance noise can be dampened by the flexible air conduit 120.

The flexible air conduit 120 is designed to decouple vibrations generated from the motor fan assembly 108 from the housing 102, thereby reducing noise transmission. Since the flexible air conduit 120 moves with respect to the motor fan assembly 108 and the housing 102 during operation, some of the vibrations from the motor fan assembly 108 are not transmitted to the housing 102. At the same time, the flexible air conduit 120 also dampens the airborne noise from the motor fan assembly 108.

The flexible air conduit 120 can be made of a flexible foam or rubber material, such as neoprene foam, polyurethane foam, silicone foam, natural rubber, closed cell foam, EPDM foam, nitrile foam, butyl foam, EVA foam, acoustic foam, polyethylene foam, melamine foam, PVC foam, open cell foam, soundproof foam, polyester foam, foam rubber, insulation foam, anechoic foam, and high-density foam. Alternatively, any other suitable foam can be used so long as the material can prevent the passage of air across the material e.g. the airflow is along the flexible air conduit 120 and not through the walls of the flexible air conduit 120.

In some other examples, the flexible air conduit 120 can be made of a flexible plastic material. However, in some examples it is preferable to use a foam material for the flexible air conduit 120 because the flexible air conduit 120 will dampen both noise from the high air speed and decouple vibrations from the motor fan assembly 108 from the housing 102.

The flexible air conduit 120 can alternatively be made of suitable textile fibre, fabric or felt.

In addition, the flexible air conduit 120 has a first conduit end 128. The first conduit end 128 is the end of the flexible air conduit 120 adjacent or closest to the motor fan assembly 108. The first conduit end 128 can be designed to securely fit onto the motor fan outlet 110, ensuring a stable and secure connection that prevents air leakage and maximises the efficiency of the vacuum cleaning device 100. Alternatively, the first conduit end 128 can be mounted to an intermediate component (such as a filter downstream of the motor fan assembly 108 - not shown) on the vacuum cleaner device 100. In this way, the airflow exits the motor fan assembly 108, enters the intermediate component and then enters the flexible air conduit 120.

In addition, the flexible air conduit 120 includes a second conduit end 130. The second conduit end 130 is the end of the flexible air conduit 120 adjacent or closest to the housing 102 to the clean air outlet 106. This design allows the flexible air conduit 120 to effectively channel the airflow from the motor fan assembly 108 to the clean air outlet 106. The second conduit end 130 can be designed to securely fit into the clean air outlet 106. Alternatively, the second conduit end 130 can be mounted to an intermediate component (such as a filter downstream of the motor fan assembly 108) on the vacuum cleaner device 100. In this way, the airflow exits the second conduit end 130 of the flexible air conduit 120 and enters the intermediate component and then enters the clean air outlet 106.

This means that the flexible air conduit 120 can be directly mounted between the motor fan outlet 110. Alternatively, the flexible air conduit 120 can be mounted to one or more other components along the airflow path 118 between the motor fan outlet 110 and the clean air outlet 106.

In some configurations, the flexible air conduit 120 has a diameter that falls within a preferred range of 1 cm to 10 cm. The diameter of the flexible air conduit 120 can affect the efficiency of the vacuum cleaning device 100. For instance, a smaller diameter may restrict airflow, reducing vacuum efficiency, while a larger diameter may make the vacuum bulkier and less manoeuvrable. The inside diameter of the flexible air conduit 120 is also a consideration in the design of the vacuum cleaning device 100.

In some examples, the flexible air conduit 120 can have various cross-sectional shapes, such as circular, rectangular, or oval. Indeed, the flexible air conduit 120 can have any suitable cross-sectional shape as required.

The shape of the flexible air conduit 120 can affect the airflow path 118 and the overall performance of the vacuum cleaning device 100. For instance, a circular flexible air conduit 120 may provide a smoother airflow path 118, while a rectangular or oval flexible air conduit 120 may provide a larger surface area for the airflow path 118. The flexible air conduit 120 can also have a constant cross-section or be tapered with an opening angle between the first conduit end 128 and the second conduit end 130. In some examples, the opening angle of the flexible air conduit 120 is smaller than 10° for example around 7°. In some examples, the opening angle of the flexible air conduit 120 is 1°, 5°,10°, 15°, 20°, 25°.

In some examples, the length of the flexible air conduit 120 is within a preferred range of 5 cm to 15 cm. In some examples, the flexible air conduit 120 has a length of 5cm, 10cm, 15cm, 20cm, 25cm, 30cm or any other length as required. The length of the flexible air conduit 120 is a factor in determining the overall size and manoeuvrability of the vacuum cleaning device 100. A longer flexible air conduit 120 may make the vacuum cleaning device 100 bulkier and less manoeuvrable, while a shorter flexible air conduit 120 may reduce the air resistance. In some examples, the length of the flexible air conduit 120 is also greater than the cross-section diameter of the flexible air conduit 120, ensuring efficient airflow from the motor fan assembly 108 to the clean air outlet 106.

In some examples, an inner conduit surface 134 is flat. Accordingly, the cross-sectional area of the flexible air conduit 120 is constant along the airflow path 118 between the first conduit end 128 and the second conduit end 130. In some other examples, the cross-sectional area of the flexible air conduit 120 varies along the airflow path 118 between the first conduit end 128 and the second conduit end 130. For example, if the flexible air conduit 120 tapers as mentioned above, then e.g. the cross-sectional area at the first conduit end 128 will be smaller than the cross-sectional area at the second conduit end 130.

Furthermore, the inner conduit surface 134 can be rough or undulating. For example, the inner conduit surface 134 may comprise a series or pattern of troughs and peaks. In this case, the cross-sectional area of the flexible air conduit 120 will vary at different positions along the airflow path 118.

In some examples, as shown in Figure 2, the airflow path 118 within the flexible air conduit 120 is straight. In other examples, the airflow path 118 may be curved or even serpentine. It may be desirable to force the air through a plurality of turns in the airflow path 118 in order to disturb and reduce the airborne noise. The plurality of turns may also optionally slow the airspeed of the exhaust air at the clean air outlet 106.

In some implementations, the vacuum cleaning device 100 includes a conduit connection 124 for connecting the flexible air conduit 120 to the motor fan outlet 110 and the housing mounting lip 122. The conduit connection 124 can be made in various ways, depending on the specific design, and intended use of the vacuum cleaning device 100.

For instance, the conduit connection 124 can be made with a slip fit or press fit design, a snap-fit or locking mechanism, a hose clamp or band clamp, or an adhesive or bonding agent. This means that the conduit connection 124 can be a friction fit between the flexible air conduit 120 and the housing mounting lip 122 and / or the motor fan outlet 110. The conduit connection 124 is designed to ensure a secure and stable connection between the flexible air conduit 120 and the other components of the vacuum cleaning device 100.

Alternatively, the conduit connection 124 can be a separate component which is fixed to the flexible air conduit 120. The conduit connection 124 as shown in Figure 2 is used at the first conduit end 128 and the second conduit end 130. This means that the flexible air conduit 120 can flex during operation of the vacuum cleaning device 100, but still remain in contact with the housing mounting lip 122 and the motor fan outlet 110.

In some configurations, the vacuum cleaning device 100 includes a filter 114. The filter 114 is disposed along the airflow path 118 between the dirt container 112 and the clean air outlet 106. The filter 114 is designed to trap and remove small particles from the airflow, thereby ensuring that the air exiting the vacuum cleaning device 100 through the clean air outlet 106 is clean. The filter 114 can be made of various materials and can have various designs, depending on the specific design and intended use of the vacuum cleaning device 100.

The filter 114 as shown in Figure 2 is located upstream of the motor fan assembly 108 on the airflow path 118. Additionally, other filter elements (not shown) can be located downstream of the motor fan assembly 108. In some examples, additional dirt separating elements can be mounted in the housing 102 to further aid dust separation. For example, a cyclonic separating apparatus can be mounted in the dirt container 112. Cyclonic separating apparatus are known and will not be discussed in any further detail.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vacuum cleaning device (100) comprising:
a housing (102) having a dirty air inlet (104) and a clean air outlet (106);
a motor fan assembly (108) mounted in the housing (102) and configured to generate negative pressure airflow along an airflow path (118) between the dirty air inlet (104) and the clean air outlet (106); and
a flexible air conduit (120) in fluid communication between a motor fan outlet (110) of the motor fan assembly (108) and the clean air outlet (106), wherein the flexible air conduit (120) is configured to decouple vibrations generated from the motor fan assembly (108) from the housing (102).

2. The vacuum cleaning device (100) according to claim 1, wherein the flexible air conduit (120) is connected between a motor fan outlet (110) of the motor fan assembly (108) and the clean air outlet (106) along the airflow path (118)

3. The vacuum cleaning device (100) according to claims 1 or 2, wherein the flexible air conduit (120) is made of a flexible foam or rubber material or wherein the flexible air conduit (120) is made of textile fibre, fabric or felt.

4. The vacuum cleaning device (100) according to claim 3, wherein the flexible foam or rubber material is one or more of neoprene foam, polyurethane foam, silicone foam, natural rubber, closed cell foam, EPDM foam, nitrile foam, butyl foam, EVA foam, acoustic foam, polyethylene foam, melamine foam, PVC foam, open cell foam, soundproof foam, polyester foam, foam rubber, insulation foam, anechoic foam, and high-density foam.

5. The vacuum cleaning device (100) according to any one of claims 1 to 4, further comprising a housing mounting lip (122) projecting from the housing (102) and configured to receive the flexible air conduit (120).

6. The vacuum cleaning device (100) according to claim 5, wherein the housing mounting lip (122) inserts into the flexible air conduit (120) or surrounds an outer surface of the flexible air conduit (120).

7. The vacuum cleaning device (100) according to any one of claims 1 to 6, wherein the motor fan outlet (110) projects out from the motor fan assembly (108) and is configured to receive the flexible air conduit (120).

8. The vacuum cleaning device (100) according to claim 7, wherein the motor fan outlet (110) inserts into the flexible air conduit (120) or surrounds an outer surface of the flexible air conduit (120).

9. The vacuum cleaning device (100) according to any one of claims 1 to 8, wherein the flexible air conduit (120) has a constant cross-section or is tapered with an opening angle smaller than 10°.

10. The vacuum cleaning device (100) according to any one of claims 1 to 9, wherein the flexible air conduit (120) has a length in the range of 5 cm to 15 cm.

11. The vacuum cleaning device (100) according to any one of claims 1 to 10, wherein the flexible air conduit (120) has an inside diameter in the range of 1 cm to 10 cm.

12. The vacuum cleaning device (100) according to any one of claims 1 to 11, wherein the flexible air conduit (120) has a first conduit end (128) connected to the motor fan assembly (108) and a second conduit end (130) connected to the clean air outlet (106).

13. The vacuum cleaning device (100) according to any one of claims 1 to 12, further comprising a dirt container (112) disposed along the airflow path (118) between the dirty air inlet (104) and the clean air outlet (106).

14. The vacuum cleaning device (100) according to any one of claims 1 to 13, further comprising a filter (114) disposed along the airflow path (118) between the dirt container (112) and the clean air outlet (106).

15. The vacuum cleaning device (100) according to any one of claims 1 to 14, wherein the housing (102) is cylindrical, or box shaped.

16. The vacuum cleaning device (100) according to any one of claims 1 to 15, further comprising a conduit connection (124) for connecting the flexible air conduit (120) to the motor fan outlet (110) and the housing mounting lip (122), wherein the conduit connection (124) is one or more of a slip fit, press fit, snap-fit, locking mechanism, hose clamp, band clamp, adhesive, and bonding agent.

17. The vacuum cleaning device (100) according to any of the previous claims wherein the vacuum cleaning device (100) is a workshop vac.
